# EUROPÄISCHE PATENTSCHRIFT

(11) **EP 4 526 185 B1**
(45) Veröffentlichungstag und Bekanntmachung des Hinweises auf die Patenterteilung: **18.11.2026**
(21) Anmeldenummer: 23728677.8
(22) Anmeldetag: 19.05.2023
(51) Int. Cl.: B62D 25/14

(54) **STRUKTURBAUTEIL UND VERFAHREN ZUM HERSTELLEN EINES STRUKTURBAUTEILS**
STRUCTURAL COMPONENT, AND METHOD FOR PRODUCING A STRUCTURAL COMPONENT
COMPOSANT STRUCTURAL, ET PROCÉDÉ DE PRODUCTION D'UN COMPOSANT STRUCTURAL

(30) Priorität: 20.05.2022 DE 102022112720
(43) Veröffentlichungstag der Anmeldung: 26.03.2025
(73) Patentinhaber: ElringKlinger AG, 72581 Dettingen (DE)
(72) Erfinder: TRAXLER, Gerd, 73235 Weilheim Teck (DE); SCHRADE, Marco, 72534 Hayingen (DE)
(74) Vertreter: DTS Patent- und Rechtsanwälte PartmbB
(86) Internationale Anmeldenummer: PCT/EP2023/063509
(87) Internationale Veröffentlichungsnummer: WO 2023/222896

(56) Entgegenhaltungen:
- EP-A1- 1 697 202
- DE-A1- 102005 011 331
- DE-A1- 102009 014 206
- US-A1- 2004 135 400

## Beschreibung

Die vorliegende Erfindung betrifft ein Strukturbauteil, insbesondere ein Cockpitquerträger für ein Kraftfahrzeug, sowie ein Verfahren zum Herstellen eines Strukturbauteils.

Gattungsgemäße Strukturbauteile aus dem Stand der Technik sind beispielsweise aus der DE 10 2009 014 206 A1, aus der EP 1 697 202 A1, aus der US 2004/135400 A1 und aus der DE 10 2005 011331 A1 bekannt.

Der vorliegenden Erfindung liegt die Aufgabe zugrunde, ein Strukturbauteil, insbesondere ein Cockpitquerträger für ein Kraftfahrzeug, bereitzustellen, welches einfach und kostengünstig herstellbar ist.

Diese Aufgabe wird erfindungsgemäß durch ein Strukturbauteil, insbesondere ein Cockpitquerträger für ein Kraftfahrzeug, gelöst, wobei das Strukturbauteil umfasst: ein Profilelement mit einer Umfangswandung, die einen Innenraum des Profilelements zumindest bereichsweise begrenzt, und wenigstens einer Durchgangsöffnung, die in der Umfangswandung des Profilelements vorgesehen ist, zumindest ein Befestigungselement, das korrespondierend zu der wenigstens einen Durchgangsöffnung im Innenraum des Profilelements angeordnet ist, und wenigstens einen am Profilelement und/oder am Befestigungselement ausgebildeten Umformabschnitt, der das Befestigungselement zu der Durchgangsöffnung positioniert, wobei sich der wenigstens eine Umformabschnitt von der Umfangswandung des Profilelements in Richtung des Innenraums des Profilelements erstreckt.

Bei dem Profilelement handelt es sich vorzugsweise um ein Rohrelement oder um ein Hohlprofil.

Bevorzugt kann das Profilelement aus einem Metallwerkstoff, insbesondere aus einem Leichtmetall, beispielsweise Aluminium oder Magnesium, ausgebildet sein.

Ebenso kann das Profilelement aus einem Polymerwerkstoff ausgebildet sein, vorzugsweise als ein Kunststoffformteil. Ein solches kann beispielsweise als ein Spritzgussformteil oder als ein Extrusionsbauteil ausgebildet sein.

Alternativ kann das Profilelement ebenso aus einem Verbundmaterial ausgebildet sein.

Bei dem Strukturbauteil, insbesondere bei dem Cockpitquerträger, kann es sich um ein Polymer-Metall-Hybrid-Bauteil handeln. D.h. ein Bauteil, welches durch eine Kombination aus einem Polymerwerkstoff und einem Metallwerkstoff ausgebildet ist.

Die wenigstens eine Durchgangsöffnung kann bevorzugt durch Bohren, Fräsen, Schneiden, Stanzen oder dergleichen in die Umfangswandung des Profilelements eingebracht sein.

Bei dem zumindest einen Befestigungselement handelt es sich insbesondere um ein Bauteil, welches zur Befestigung von weiteren Bauteilen, Elementen, Strukturen oder dergleichen an dem Strukturbauteil eingerichtet ist.

Das zumindest eine Befestigungselement kann einen Einsteckabschnitt, einen Gewindeabschnitt, einen Rastabschnitt oder dergleichen zum Ausbilden einer Verbindungsanordnung mit einem oder mehreren weiteren Bauteilen, Elementen oder Strukturen aufweisen.

Eine Weiterbildung des Strukturbauteils kann vorsehen, dass der wenigstens eine Umformabschnitt an dem zumindest einen Befestigungselement und/oder an dem Profilelement angreift und/oder eingreift.

Indem der wenigstens eine Umformabschnitt an dem zumindest einen Befestigungselement und/oder an dem Profilelement angreift und/oder eingreift kann eine ortsfeste Positionierung des Befestigungselements zu der Durchgangsöffnung ausgebildet sein.

Der wenigstens eine Umformabschnitt kann in der Weise ausgebildet sein, dass dieser an dem zumindest einen Befestigungselement und/oder an dem Profilelement anliegt. Dadurch kann ein Verrutschen des Befestigungselements im Innenraum des Profilelements in zumindest einer Richtung verhindert sein.

Das Profilelement und das zumindest eine Befestigungselement können zumindest abschnittsweise gemeinsam umgeformt sein. Auf diese Weise kann der wenigstens eine Umformabschnitt durch eine formschlüssige Verbindung zwischen dem Profilelement und dem zumindest einen Befestigungselement ausbildet sein.

**In** einer bevorzugten Ausgestaltung des Strukturbauteils kann vorgesehen sein, dass der wenigstens eine Umformabschnitt durch plastisches Umformen eines am Profilelement und/oder am zumindest einen Befestigungselement vorgesehenen Materialreservoirs ausgebildet ist.

Durch das Vorsehen eines solchen Materialreservoirs kann an dem Profilelement und/oder an dem Befestigungselement ein Materialabschnitt bereitgestellt sein , der das Umformen ermöglicht.

Vorzugsweise ist das Materialreservoir durch das Profilelement und/oder das Befestigungselement ausgebildet.

Durch das Vorsehen eines solchen Materialreservoirs kann eine strukturelle Beeinträchtigung des Profilelements und/oder des Befestigungselements durch den Umformvorgang, beispielsweise eine Beeinträchtigung der Festigkeit, verhindert sein.

Vorzugsweise kann bei dem Strukturbauteil vorgesehen sein, dass das Materialreservoir zum Ausbilden des wenigstens einen Umformabschnitts an einem die Durchgangsöffnung begrenzenden Randbereich des Profilelements ausgebildet ist.

Das Materialreservoir kann beispielsweise als eine Materiallasche ausgebildet sein, die sich von dem die Durchgangsöffnung umgebenden Randbereich des Profilelements in die Durchgangsöffnung hinein erstreckt.

Bei einer vorteilhaften Weiterbildung des Strukturbauteils kann das Materialreservoir als ein durch die Umfangswandung des Profilelements ausgebildeter Vorsprungabschnitt ausgebildet sein.

Der wenigstens eine das Materialreservoir bildende Vorsprungabschnitt kann bevorzugt in einer Ebene der Umfangswandung des Profilelements ausgebildet sein und sich vom Randbereich des Profilelements, insbesondere in der Ebene der Umfangswandung, in die Durchgangsöffnung hinein erstrecken.

Bevorzugt kann das Materialreservoir eine Materialstärke aufweisen, welche einer Materialstärke der Umfangswandung des Profilelements entspricht. Dies kann eine einfache Fertigung des Materialreservoirs ermöglichen.

Alternativ kann das Materialreservoir eine Materialstärke aufweisen, welche größer als eine Materialstärke der Umfangswandung des Profilelements ausgebildet ist. Dadurch kann eine ausreichende Materialmenge für den Umformvorgang bereitgestellt sein.

Ebenso kann das Materialreservoir eine Materialstärke aufweisen, welche geringer als eine Materialstärke der Umfangswandung des Profilelements ausgebildet ist. Aufgrund der geringeren Materialstärke des Materialreservoirs kann erreicht sein, dass zum Umformen des Materialreservoirs eine geringere Umformkraft erforderlich ist.

Besonders bevorzugt kann bei dem Strukturbauteil vorgesehen sein, dass an dem Profilelement und/oder dem zumindest einen Befestigungselement, insbesondere an dem die Durchgangsöffnung umgebenden Randbereich des Profilelements, mehrere zueinander beabstandete Materialreservoire zum Ausbilden mehrerer Umformabschnitte ausgebildet sind.

Insbesondere können an dem Profilelement und/oder dem zumindest einen Befestigungselement, insbesondere an dem die Durchgangsöffnung umgebenden Randbereich des Profilelements, vier zueinander beabstandete Materialreservoire vorgesehen sein.

Dabei können jeweils zwei Materialreservoire an dem Profilelement und/oder dem zumindest einen Befestigungselement, insbesondere an dem die Durchgangsöffnung umgebenden Randbereich des Profilelements, gegenüberliegend zueinander angeordnet sein.

Durch die mehreren, insbesondere vier, Umformabschnitte kann eine Fixierung des Befestigungselements im Innenraum des Profilelements ausgebildet sein.

Insbesondere kann durch die mehreren, insbesondere vier, Umformabschnitte eine ortsfeste Positionierung des Befestigungselements zu der wenigstens einen Durchgangsöffnung des Profilelements ausgebildet sein.

Ferner ist bei dem Strukturbauteil vorgesehen, dass sich der wenigstens eine Umformabschnitt von der Umfangswandung des Profilelements in Richtung des Innenraums des Profilelements erstreckt.

Bevorzugt ragt der wenigstens eine Umformabschnitt gegenüber einer Innenwand des Profilelements in Richtung des Innenraums des Profilelements hervor.

Der wenigstens eine Umformabschnitt kann sich vorteilhafterweise im Wesentlichen rechtwinklig von der Innenwand des Profilelements in Richtung des Innenraums des Profilelements erstrecken.

Der Umformabschnitt kann sich beispielsweise 20 mm oder weniger, vorzugsweise 10 mm oder weniger, von der Innenwand des Profilelements in Richtung des Innenraums des Profilelements erstrecken.

In einer Ausgestaltung des Strukturbauteils kann das zumindest eine Befestigungselement einen hülsenförmigen Grundkörper aufweisen und sich zwischen gegenüberliegenden Innenwänden des Profilelements erstrecken.

Auf diese Weise kann sich das zumindest eine Befestigungselement an den gegenüberliegenden Innenwänden abstützen und eine strukturelle Festigkeit des Strukturbauteils verstärken.

Das zumindest eine Befestigungselement kann eine beliebige Querschnittsgeometrie aufweisen. Beispielsweise kann das Befestigungselement eine runde, eckige oder ovale Querschnittsgeometrie aufweisen oder eine im Wesentlichen rechteckige Querschnittsgeometrie mit abgerundeten Eckbereichen.

Der hülsenförmige Grundkörper des Befestigungselements weist bevorzugt einen Hohlraum auf, in dem beispielsweise ein Einsteckabschnitt, ein Gewindeabschnitt, ein Rastabschnitt oder dergleichen für eine Verbindungsanordnung vorgesehen ist.

Bevorzugt kann bei dem Strukturbauteil vorgesehen sein, dass ein Innenquerschnitt der wenigstens einen Durchgangsöffnung zumindest bereichsweise kleiner ausgebildet ist als ein Querschnitt des Befestigungselements und das zur Durchgangsöffnung positionierte Befestigungselement zumindest bereichsweise an einem die Durchgangsöffnung umgebenden Innenwandabschnitt des Profilelements anliegt.

Insbesondere liegt das hülsenförmige Befestigungselements vollumfänglich an dem die Durchgangsöffnung umgebenden Innenwandabschnitt des Profilelements an und/oder stützt sich an diesem ab.

Vorzugsweise ist ein freier Innenquerschnitt des Befestigungselements zumindest näherungsweise und/oder zumindest abschnittsweise identisch mit dem freien Innenquerschnitt der wenigstens einen Durchgangsöffnung.

Bevorzugt kann vorgesehen sein, dass der die wenigstens eine Durchgangsöffnung begrenzende Randbereich und eine Innenfläche des Befestigungselements, insbesondere des hülsenförmigen Befestigungselements, zumindest abschnittsweise fluchtend zueinander ausgebildet sind.

Vorteilhafterweise kann bei dem Strukturbauteil vorgesehen sein, dass das Profilelement gegenüberliegend zu der wenigstens einen Durchgangsöffnung zumindest eine weitere Durchgangsöffnung in der Umfangswandung des Profilelements aufweist.

Die zumindest eine weitere Durchgangsöffnung kann äquivalent zu der wenigstens einen Durchgangsöffnung ausgebildet sein. Insbesondere ein freier Innenquerschnitt der wenigstens einen Durchgangsöffnung und der gegenüberliegenden zumindest einen weiteren Durchgangsöffnung können äquivalent zueinander ausgebildet sein.

Die wenigstens eine Durchgangsöffnung und die gegenüberliegende zumindest eine weitere Durchgangsöffnung können fluchtend zueinander ausgerichtet sein.

In einer Weiterbildung des Strukturbauteils kann ein Innenquerschnitt der zumindest einen weiteren Durchgangsöffnung zumindest bereichsweise kleiner ausgebildet sein als ein Querschnitt des Befestigungselements und das Befestigungselement kann zumindest bereichsweise an einem die zumindest eine weitere Durchgangsöffnung umgebenden Innenwandabschnitt des Profilelements anliegen.

Insbesondere liegt das hülsenförmige Befestigungselements vollumfänglich an dem die zumindest eine Durchgangsöffnung umgebenden Innenwandabschnitt des Profilelements an und/oder stützt sich an diesem ab.

Vorzugsweise ist ein freier Innenquerschnitt des Befestigungselements zumindest näherungsweise und/oder zumindest abschnittsweise identisch mit dem freien Innenquerschnitt der zumindest einen weiteren Durchgangsöffnung.

Bevorzugt kann vorgesehen sein, dass der die zumindest eine weitere Durchgangsöffnung begrenzende Randbereich und die Innenfläche des Befestigungselements, insbesondere des hülsenförmigen Befestigungselements, zumindest abschnittsweise fluchtend zueinander ausgebildet sind.

In einer Ausgestaltung des Strukturbauteils kann die zumindest eine weitere Durchgangsöffnung einen Öffnungsquerschnitt aufweisen, durch den das wenigstens eine Befestigungselement in den Innenraum des Profilelements einbringbar ist.

Der freie Innenquerschnitt der zumindest einen weiteren Durchgangsöffnung kann dabei geringfügig größer ausgebildet sein, als der Querschnitt des Befestigungselements.

Besonders bevorzugt kann bei dem Strukturbauteil vorgesehen sein, dass das Profilelement ein innenhochdruckumgeformtes Rohrelement ist.

Indem das Profilelement durch ein Innenhochdruckverfahren ausgebildet ist, kann dieses in der Längserstreckung neben einer linearen Querschnittsgeometrie auch komplexe Querschnittsgeometrien aufweisen.

Ein solches innenhochdruckumgeformtes Rohrelement ist bevorzugt aus einem Metallwerkstoff, insbesondere aus einem Leichtmetall, beispielsweise Aluminium oder Magnesium, ausgebildet.

Die Aufgabe wird zudem durch ein Verfahren zum Herstellen eines Strukturbauteils gemäß einer der zuvor beschriebenen Ausführungsformen gelöst, wobei das Verfahren die Schritte umfasst: Bereitstellen eines Profilelements, das eine Umfangswandung, die einen Innenraum des Profilelements zumindest bereichsweise begrenzt, und wenigstens eine Durchgangsöffnung, die in der Umfangswandung des Profilelements vorgesehen ist, aufweist, Einbringen zumindest eines Befestigungselements in den Innenraum des Profilelements und Ausrichten des Befestigungselements zu der wenigstens einen Durchgangsöffnung, Umformen wenigstens eines am Profilelement und/oder am Befestigungselement ausgebildeten Materialreservoirs zum Ausbilden eines Umformabschnitts, der das Befestigungselement zu der Durchgangsöffnung positioniert.

Bevorzugt kann bei dem Verfahren vorgesehen sein, dass das zumindest eine Befestigungselement seitlich in den Innenraum des Profilelements eingebracht, insbesondere eingeschoben wird, zu der wenigstens einen Durchgangsöffnung ausgerichtet wird und durch das Ausbilden des wenigstens einen Umformabschnitts zu der Durchgangsöffnung positioniert wird.

In einer alternativen Ausgestaltung des Verfahrens kann das zumindest eine Befestigungselement einseitig durch eine weitere Durchgangsöffnung in der Umfangswandung in den Innenraum des Profilelements eingebracht werden, zu der wenigstens einen Durchgangsöffnung ausgerichtet werden und durch das Ausbilden des wenigstens einen Umformabschnitts zu der wenigstens einen Durchgangsöffnung positioniert werden.

Eine Weiterbildung des Verfahrens kann ferner die Schritte aufweisen: Einbringen eines Formwerkzeugs in die wenigstens eine Durchgangsöffnung, plastisches Umformen des wenigstens einen Materialreservoirs durch das Einbringen des Formwerkzeugs in die wenigstens eine Durchgangsöffnung, Ausbilden des Umformabschnitts durch das plastische Umformen des Materialreservoirs, wobei der Umformabschnitt sich von der Umfangswandung des Profilelements in Richtung des Innenraums des Profilelements erstreckend ausgebildet wird.

Vorzugsweise handelt es sich bei dem Formwerkzeug um einen Formstempel, der durch die wenigstens eine Durchgangsöffnung in einen Hohlraum des Befestigungselements einschiebbar ist.

An dem Formwerkzeug sind korrespondierend zu den am Profilelement vorgesehen Materialreservoiren mehrere Formelemente ausgebildeten, durch welche das Umformen der Materialreservoire zu den Umformabschnitten erfolgt.

Weitere bevorzugte Merkmale und/oder Vorteile der Erfindung sind Gegenstand der nachfolgenden Beschreibung und der zeichnerischen Darstellung von Ausführungsbeispielen.

**In** den Figuren zeigen:
- Fig. 1: eine schematische perspektivische Ansicht eines Profilelements für eine erfindungsgemäße Ausführungsform eines Strukturbauteils;
- Fig. 2: eine schematische perspektivische Ansicht des Profilelements in Fig. 1 mit einem in das Profilelement eingebrachten Befestigungselement;
- Fig. 3: eine schematische perspektivische Ansicht eines Formwerkzeugs zum Ausbilden des Strukturbauteils;
- Fig. 4: eine schematische perspektivische Ansicht des Formwerkzeugs in Fig. 3 während eines Umformvorgangs zum Ausbilden des Strukturbauteils;
- Fig. 5: eine Schnittansicht des Formwerkzeugs während des Umformvorgangs gemäß Fig. 4;
- Fig. 6: eine schematische perspektivische Ansicht einer erfindungsgemäßen Ausführungsform des Strukturbauteils.

Gleiche oder funktional äquivalente Elemente sind in sämtlichen Figuren mit denselben Bezugszeichen versehen.

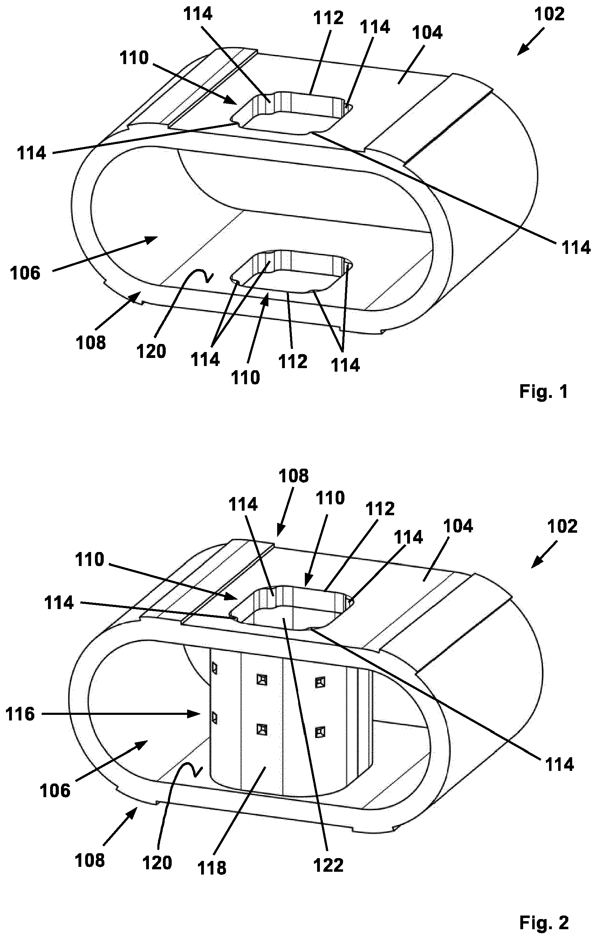

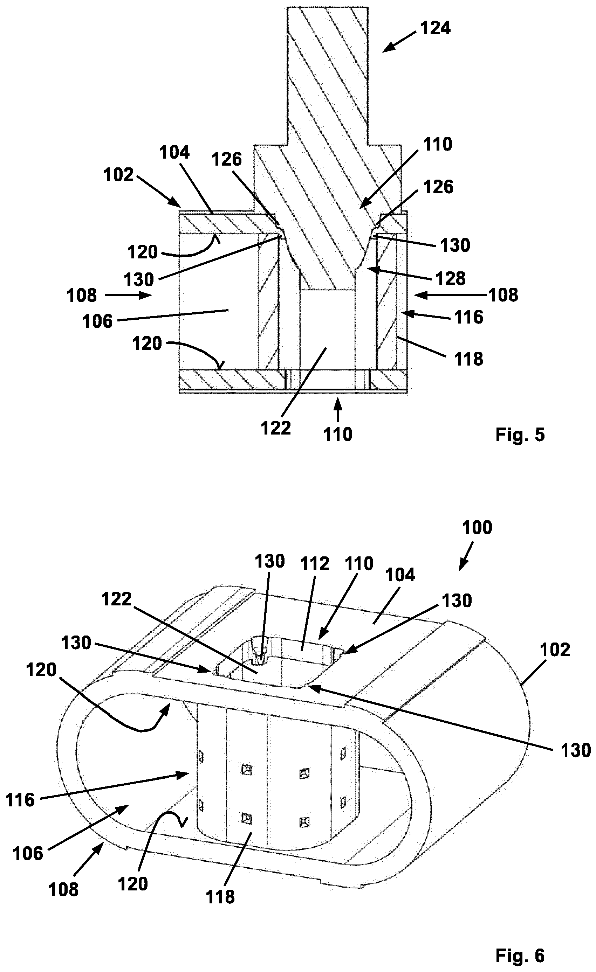

Die Fig. 1 zeigt eine schematische Darstellung eines Profilelements 102 eines als Ganzes in Fig. 6 dargestellten und mit 100 bezeichneten Strukturbauteils. Bei diesem Strukturbauteil 100 kann es sich bevorzugt um ein Cockpitquerträger für ein Kraftfahrzeug handeln.

In Fig. 1 ist ein Teilbereich des Profilelements 102 dargestellt. Das Profilelement 102 erstreckt sich in einer Längserstreckungsrichtung. Vorzugsweise ist das Profilelement 102 als ein Rohrelement oder ein Hohlprofil ausgebildet.

Bei dem Profilelement 102 handelt es sich besonders bevorzugt um ein innenhochdruckumgeformtes Rohrelement.

Ein solches innenhochdruckumgeformtes Profilelement 102 kann entlang der Längserstreckung des Profilelements 102 eine variable Querschnittsgeometrie aufweisen. Die Querschnittsgeometrie des Profilelements 102 kann entsprechend einer Ausgestaltung eines Formwerkzeugs flexibel an einen Anwendungsbereich des Strukturbauteils 100 angepasst sein.

Ein Durchmesser des Profilelements 102 kann beispielsweise 200 mm oder weniger, bevorzugt 100 mm oder weniger, betragen.

Das Strukturbauteil 100 kann, insbesondere bei der Verwendung als ein Cockpitquerträger für ein Kraftfahrzeug, bevorzugt als ein Polymer-Metall-Hybrid-Bauteil ausgebildet sein. Als ein solches ist das Strukturbauteil 100 durch eine Kombination aus einem Polymerwerkstoff und einem Metallwerkstoff ausgebildet.

Insbesondere ist das Profilelement 102 aus einem Metallwerkstoff, bevorzugt aus einem Leichtmetall, beispielsweise Aluminium oder Magnesium, ausgebildet.

Alternativ kann das Profilelement 102 auch aus einem Polymerwerkstoff oder aus einem Verbundmaterial ausgebildet sein.

Das Profilelement 102 umfasst eine Umfangswandung 104, die einen Innenraum 106 des Profilelements 102 zumindest bereichsweise begrenzt.

Die Umfangswandung 104 des Profilelements 102 weist bevorzugt eine Materialstärke von 10 mm oder weniger, besonders bevorzugt eine Materialstärke von 5 mm oder weniger, auf.

Über die Längserstreckung und/oder Umfangserstreckung des Profilelements 102 kann die Materialstärke der Umfangswandung 104 variieren. Beispielsweise kann die Materialstärke der Umfangswandung 104 in Bereichen des Profilelements 102 die eine hohe Festigkeit erfordern dicker ausgebildet sein als in anderen Bereichen des Profilelements 102.

Die Umfangswandung 104 begrenzt den Innenraum 106 des Profilelements 102 bevorzugt vollumfänglich.

An zumindest einem Ende des Profilelements 102, vorzugsweise an beiden Enden des Profilelements 102, ist eine Eintrittsöffnung 108 ausgebildet, durch die ein Zugang zum Innenraum 106 des Profilelements 102 ausgebildet ist.

**In** der Umfangswandung 104 des Profilelements 102 ist wenigstens eine Durchgangsöffnung 110 ausgebildet.

Die wenigstens eine Durchgangsöffnung 110 kann bevorzugt durch Bohren, Fräsen, Schneiden, Stanzen oder dergleichen in die Umfangswandung 104 des Profilelements 102 eingebracht sein.

Insbesondere weist das Profilelement 102 in dessen Längserstreckung mehrere zueinander beabstandete Durchgangsöffnungen 110 auf.

Wie in Fig. 1 dargestellt, sind bevorzugt jeweils zwei Durchgangsöffnungen 110 gegenüberliegend in der Umfangswandung 104 des Profilelements 102 vorgesehen.

Die gegenüberliegenden Durchgangsöffnungen 110 können insbesondere fluchtend zueinander ausgerichtet sein.

Die Durchgangsöffnung 110 kann einen im Wesentlichen rechteckigen Öffnungsquerschnitt aufweisen. Alternativ kann die Durchgangsöffnung 110 einen beliebigen anderen Öffnungsquerschnitt aufweisen, beispielsweise einen runden oder ovalen Öffnungsquerschnitt.

An einem die Durchgangsöffnung 110 umgebenden Randbereich 112 des Profilelements 102 sind mehrere zueinander beabstandete Materialreservoire 114 ausgebildet.

An dem die Durchgangsöffnung 110 umgebenden Randbereich 112 des Profilelements 102 sind vorzugsweise vier Materialreservoire 114 ausgebildet.

Ebenso können an dem die Durchgangsöffnung 110 umgebenden Randbereich 112 mehr als vier oder auch weniger als vier Materialreservoire 114 vorgesehen sein.

Die Materialreservoire 114 sind vorzugsweise jeweils als ein durch die Umfangswandung 104 des Profilelements 102 ausgebildeter Vorsprungabschnitt ausgebildet.

Die Materialreservoire 114 können laschenförmige Vorsprünge bilden.

Jeder dieser Materialreservoire 114 stellt Material bereit, um jeweils einen Umformabschnitt durch einen nachfolgend näher beschriebenen Umformvorgang auszubilden.

Gemäß der in Fig. 1 dargestellten Ausführungsform des Profilelements 102 sind die Materialreservoire 114 jeweils in einem Eckbereich der im Wesentlichen rechteckförmigen Durchgangsöffnung 110 angeordnet.

Ebenso können die Materialreservoire 114 jeweils an einer beliebigen anderen Stelle am Randbereich 112 der Durchgangsöffnung 110 angeordnet sein.

Bevorzugt sind jeweils zwei Materialreservoire 114 sich gegenüberliegend am Randbereich 112 der Durchgangsöffnung 110 angeordnet.

Die Materialreservoire 114 erstrecken sich bevorzugt von dem die Durchgangsöffnung 110 begrenzenden Randbereich 112 in die Durchgangsöffnung 110 hinein.

Insbesondere erstrecken sich die Materialreservoire 114 in einer Ebene der Umfangswandung 104 des Profilelements 102.

Die Materialreservoire 114 können vorzugsweise die gleiche Materialstärke aufweisen wie die Wandungsdicke der Umfangswandung 104 des Profilelements 102.

Fig. 2 zeigt das Profilelement 102 mit einem in den Innenraum 106 eingebrachten Befestigungselement 116.

Bei dem Befestigungselement 116 handelt es sich insbesondere um ein Bauteil zur Befestigung von weiteren Bauteilen, Elementen oder Strukturen an dem Strukturbauteil 100.

Weist das Profilelement 102 mehrere zueinander beabstandete Durchgangsöffnungen 110 auf, können bevorzugt mehrere Befestigungselemente 116 in den Innenraum 106 eingebracht und zu den jeweiligen Durchgangsöffnungen 110 ausgerichtet sein.

Das Befestigungselement 116 ist bevorzugt über eine der Eintrittsöffnungen 108 an den Enden des Profilelements 102 in den Innenraum 106 des Profilelements 102 eingebracht.

**In** einer alternativen Ausführungsform des Profilelements 102 kann zudem vorgesehen sein, dass eine der Durchgangsöffnungen 110 einen Öffnungsquerschnitt aufweist, der geringfügig größer ausgebildet ist als ein Querschnitt des Befestigungselements 116, so dass das Befestigungselement 116 durch die eine der Durchgangsöffnungen 110 in den Innenraum 106 eingeschoben werden kann.

Das Befestigungselement 116 weist einen hülsenförmigen Grundkörper 118 auf, der sich zwischen gegenüberliegenden Innenwänden 120 des Profilelements 102 erstreckt.

Ein Hohlraum 122 des Befestigungselements 116 weist bevorzugt einen Einsteckabschnitt, einen Gewindeabschnitt, einen Rastabschnitt oder dergleichen auf, um ein oder mehrere Bauteile, Elemente oder Strukturen mit dem Strukturelement 100 zu verbinden.

Das Befestigungselement 116 weist eine im Wesentlichen rechteckförmige Querschnittsgeometrie mit abgerundeten Eckbereichen auf. Das Befestigungselement 116 kann jedoch ebenso eine beliebige andere Querschnittsgeometrie aufweisen, beispielsweise eine runde, eckige oder ovale Querschnittsgeometrie.

Das Befestigungselement 116 ist korrespondierend zu den Durchgangsöffnungen 110 ausgerichtet. Dadurch ist der Hohlraum 122 des Befestigungselements 116 über die Durchgangsöffnungen 110 zugänglich.

Bevorzugt ist ein freier Innenquerschnitt der Durchgangsöffnungen 110 kleiner ausgebildet als ein Querschnitt des Befestigungselements 116, so dass das zur Durchgangsöffnung 110 ausgerichtete Befestigungselement 116 an einem die Durchgangsöffnung 110 umgebenden Innenwandabschnitt des Profilelements 102 anliegt.

Der freie Innenquerschnitt des Befestigungselements 116 kann vorzugsweise zumindest näherungsweise und/oder zumindest abschnittsweise identisch mit dem freien Innenquerschnitt der Durchgangsöffnung 110 ausgebildet sein.

Insbesondere sind eine Innenfläche des hülsenförmigen Befestigungselements 116 und der die Durchgangsöffnung 110 begrenzende Randbereich 112 zumindest abschnittsweise fluchtend zueinander ausgebildet.

Die Materialreservoire 114 ragen von dem die Durchgangsöffnung 110 begrenzenden Randbereich 112 gegenüber der Innenfläche des hülsenförmigen Befestigungselements 116 hervor. Auf diese Weise können die Materialreservoire 114 durch den Umformvorgang in den Hohlraum 122 des Befestigungselements 116 umgeformt werden.

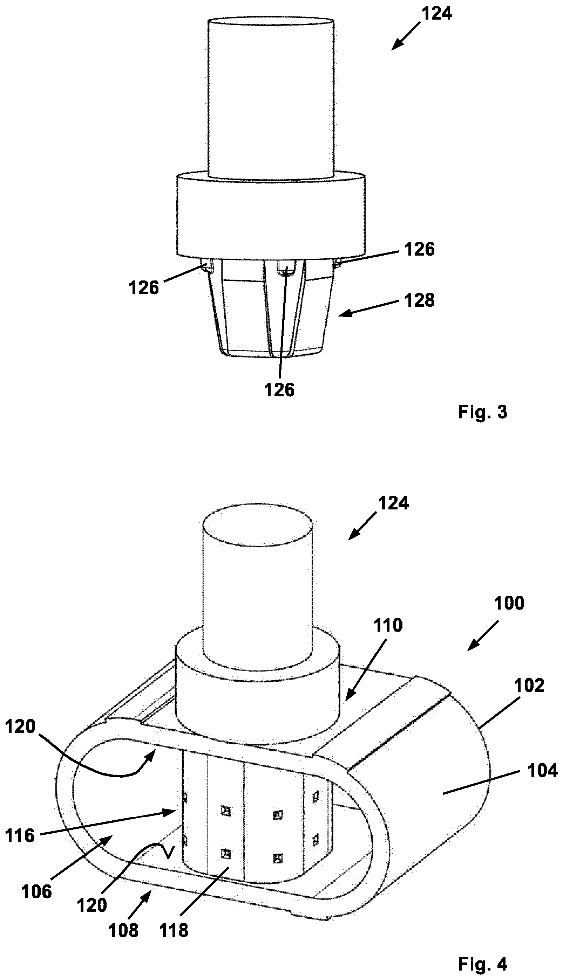

Fig. 3 zeigt ein Formwerkzeug 124 zum Ausführen dieses Umformvorgangs. Das Formwerkzeug 124 ist insbesondere Teil einer nicht näher dargestellten Werkzeugeinrichtung zur automatisierten oder teilautomatisierten Fertigung des Strukturbauteils 100.

Das Formwerkzeug 124 ist vorzugsweise als ein Formstempel ausgebildet.

Das Formwerkzeug 124 umfasst mehrere Formelemente 126, die korrespondierend zu den am Profilelement 102 ausgebildeten Materialreservoiren 114 vorgesehen sind.

Vorzugsweise umfasst das Formwerkzeug 124 einen Einführabschnitt 128, an dessen Außenumfang die Formelemente 126 ausgebildet sind.

Zum Fertigen des Strukturbauteils 100 wird das Befestigungselement 116 zunächst in den Innenraum 106 des Profilelements 102 eingebracht., insbesondere über eine der Eintrittsöffnungen 108 oder über eine entsprechend ausgestaltete Durchgangsöffnung 110. Danach wird das Befestigungselement 116 zu den beiden Durchgangsöffnungen 110 ausgerichtet.

Anschließend wird das Formwerkzeug 124, wie in Fig. 4 dargestellt, zum Ausführen des Umformvorgangs mit den Formelementen 126, insbesondere mit dem Einführabschnitt 128, an dem die Formelemente 126 ausgebildet sind, in der Weise in die Durchgangsöffnung 110 des Profilelements 102 eingeschoben, dass die Formelemente 126 jeweils in Kontakt mit den korrespondierenden Materialreservoiren 114 gebracht werden.

Fig. 5 verdeutlicht in einer Schnittansicht das Umformen der Materialreservoire 114 durch das Formwerkzeug 124. Durch dem Umformvorgang werden die Materialreservoire 114 an dem Profilelement 102 jeweils zu einem Umformabschnitt 130 umgeformt.

Um die Umformabschnitte 130 auszubilden, werden die Formelemente 126 des Formwerkzeugs 124 durch ein Absenken des Formwerkzeugs 124 zunächst in Anlage zu den Materialreservoiren 114 gebracht. Durch ein weiteres Absenken des Formwerkzeugs 124 werden die Materialreservoire 114 anschließend in Richtung des Innenraums 106 des Profilelements 102 plastisch umgeformt.

Die Umformabschnitte 130 werden durch das Umformen der Materialreservoire 114 in der Weise ausgebildet, dass sich die Umformabschnitte 130 von der Umfangswandung 104 des Profilelements 102 in Richtung des Innenraums 106 des Profilelements 102 erstrecken.

Insbesondere werden die Umformabschnitte 130 in der Weise ausgebildet, dass diese sich in den Hohlraum 122 des zu der Durchgangsöffnung 110 positionierten Befestigungselements 116 erstrecken.

Die Umformabschnitte 130 greifen bevorzugt in das Befestigungselement 116 ein oder greifen an dem Befestigungselement 116 an.

Dabei ist vorgesehen, dass die Umformabschnitte 130 an einer Innenwand 132 des Befestigungselements 116 anliegen, so dass das Befestigungselement 116 im Innenraum 106 des Profilelements 102 fixiert ist, d.h. in einer ortsfesten Position zu den Durchgangsöffnungen 110 fixiert ist.

Die Umformabschnitte 130 können sich beispielsweise 20 mm oder weniger, vorzugsweise 10 mm oder weniger, von der Innenwand 120 des Profilelements 102 in Richtung des Innenraums 108 des Profilelements 102, insbesondere in den Hohlraum 122 des Befestigungselements 116, erstrecken.

Alternativ kann vorgesehen sein, dass durch das Formwerkzeug 124 die Materialreservoire 114 am Profilelement 102 und zumindest bereichsweise das Befestigungselement 116 gemeinsam umgeformt werden, so dass zwischen dem Profilelement 102 und dem Befestigungselement 116 eine formschlüssige Verbindung ausgebildet wird. Auf diese Weise kann das Befestigungselement 116 ebenfalls in dem Innenraum 106 des Profilelementes 102 ortsfest zu den Durchgangsöffnungen 110 positioniert werden.

Ergänzend kann der zuvor beschriebene Umformvorgang durch das Formwerkzeug 124 ebenso an der entsprechend ausgestalteten gegenüberliegenden Durchgangsöffnung 110 ausgeführt werden.

In Fig. 6 ist das fertig ausgebildete Strukturbauteil 100 dargestellt. Fig. 6 verdeutlicht im Vergleich zu Fig. 2, wie die an dem Randbereich 112 der Durchgangsöffnung 110 ausgebildeten Materialreservoire 114 zu den Umformabschnitten 130 umgeformt sind.

Die Umformabschnitte 130 erstrecken sich vorsprungartig in den Hohlraum 122 des Befestigungselements 116 hinein. Indem die Umformabschnitte 130 in der Weise angeordnet sind, dass diese an vier Positionen an dem Befestigungselement 116 anliegen, angreifen und/oder eingreifen, ist das Befestigungselement 116 im Innenraum 106 des Profilelements 102 in der ortsfesten Position zu den Durchgangsöffnungen 110 fixiert.

### Bezugszeichenliste

- 100: Strukturbauteil
- 102: Profilelement
- 104: Umfangswandung
- 106: Innenraum
- 108: Eintrittsöffnung
- 110: Durchgangsöffnung
- 112: Randbereich
- 114: Materialreservoir
- 116: Befestigungselement
- 118: Grundkörper
- 120: Innenwand des Profilelements
- 122: Hohlraum
- 124: Formwerkzeug
- 126: Formelement
- 128: Einführabschnitt
- 130: Umformabschnitt

## Patentansprüche

1. Strukturbauteil (100), insbesondere Cockpitquerträger für ein Kraftfahrzeug, umfassend:
- ein Profilelement (102) mit einer Umfangswandung (104), die einen Innenraum (106) des Profilelements (102) zumindest bereichsweise begrenzt, und wenigstens einer Durchgangsöffnung (110), die in der Umfangswandung (104) des Profilelements (102) vorgesehen ist,
- zumindest ein Befestigungselement (116), das korrespondierend zu der wenigstens einen Durchgangsöffnung (110) im Innenraum (106) des Profilelements (102) angeordnet ist, und
- wenigstens einen am Profilelement (102) und/oder am Befestigungselement (116) ausgebildeten Umformabschnitt (130), der das Befestigungselement (116) zu der Durchgangsöffnung (110) positioniert;
**dadurch gekennzeichnet dass**
sich der wenigstens eine Umformabschnitt (130) von der Umfangswandung (104) des Profilelements (102) in Richtung des Innenraums (106) des Profilelements (102) erstreckt.

2. Strukturbauteil nach Anspruch 1, **dadurch gekennzeichnet, dass** der wenigstens eine Umformabschnitt (130) an dem zumindest einen Befestigungselement (116) und/oder an dem Profilelement (102) angreift und/oder eingreift.

3. Strukturbauteil nach einem der Ansprüche 1 oder 2, **dadurch gekennzeichnet, dass** der wenigstens eine Umformabschnitt (130) durch plastisches Umformen eines am Profilelement (102) und/oder am Befestigungselement (116) vorgesehenen Materialreservoirs (114) ausgebildet ist.

4. Strukturbauteil nach Anspruch 3, **dadurch gekennzeichnet, dass** das Materialreservoir (114) zum Ausbilden des wenigstens einen Umformabschnitts (130) an einem die Durchgangsöffnung (110) umgebenden Randbereich (112) des Profilelements (102) ausgebildet ist.

5. Strukturbauteil nach Anspruch 3 oder 4, **dadurch gekennzeichnet, dass** das Materialreservoir (114) als ein durch die Umfangswandung (104) des Profilelements (102) ausgebildeter Vorsprungabschnitt ausgebildet ist.

6. Strukturbauteil nach einem der Ansprüche 3 bis 5, **dadurch gekennzeichnet, dass** an dem Profilelement (102) und/oder dem zumindest einen Befestigungselement (116), insbesondere an dem die Durchgangsöffnung (110) begrenzenden Randbereich (112) des Profilelements (102), mehrere zueinander beabstandete Materialreservoire (114) zum Ausbilden mehrerer Umformabschnitte (130) ausgebildet sind.

7. Strukturbauteil nach einem der vorhergehenden Ansprüche, **dadurch gekennzeichnet, dass** das zumindest eine Befestigungselement (116) einen hülsenförmigen Grundkörper (118) aufweist und sich zwischen gegenüberliegenden Innenwänden (120) des Profilelements (102) erstreckt.

8. Strukturbauteil nach einem der vorhergehenden Ansprüche, **dadurch gekennzeichnet, dass** ein Innenquerschnitt der wenigstens einen Durchgangsöffnung (110) zumindest bereichsweise kleiner ausgebildet ist als ein Querschnitt des Befestigungselements (116) und das zur Durchgangsöffnung (110) positionierte Befestigungselement (116) zumindest bereichsweise an einem die Durchgangsöffnung (110) umgebenden Innenwandabschnitt des Profilelements (102) anliegt.

9. Strukturbauteil nach einem der vorhergehenden Ansprüche, **dadurch gekennzeichnet, dass** das Profilelement (102) gegenüberliegend zu der wenigstens einen Durchgangsöffnung (110) zumindest eine weitere Durchgangsöffnung (110) in der Umfangswandung (104) des Profilelements (102) aufweist.

10. Strukturbauteil nach Anspruch 9, **dadurch gekennzeichnet, dass** ein Innenquerschnitt der zumindest einen weiteren Durchgangsöffnung (110) zumindest bereichsweise kleiner ausgebildet ist als ein Querschnitt des Befestigungselements (116) und das Befestigungselement (116) zumindest bereichsweise an einem die zumindest eine weitere Durchgangsöffnung (110) umgebenden Innenwandabschnitt des Profilelements (102) anliegt.

11. Strukturbauteil nach Anspruch 9, **dadurch gekennzeichnet, dass** die zumindest eine weitere Durchgangsöffnung (110) einen Innenquerschnitt aufweist, durch den das wenigstens eine Befestigungselement (116) in den Innenraum (106) des Profilelements (102) einbringbar ist.

12. Strukturbauteil nach einem der vorhergehenden Ansprüche, **dadurch gekennzeichnet, dass** das Profilelement (102) ein innenhochdruckumgeformtes Rohrelement ist.

13. Verfahren zum Herstellen eines Strukturbauteils (100) nach einem der Ansprüche 1 bis 12, aufweisend die Schritte:
- Bereitstellen eines Profilelements (102), das eine Umfangswandung (104), die einen Innenraum (106) des Profilelements (102) zumindest bereichsweise begrenzt, und wenigstens eine Durchgangsöffnung (110), die in der Umfangswandung (104) des Profilelements (102) vorgesehen ist, aufweist,
- Einbringen zumindest eines Befestigungselements (116) in den Innenraum (106) des Profilelements (102) und Ausrichten des Befestigungselements (116) zu der wenigstens einen Durchgangsöffnung (110),
- Umformen wenigstens eines am Profilelement (102) und/oder am Befestigungselement (116) ausgebildeten Materialreservoirs (114) zum Ausbilden eines Umformabschnitts (130), der das Befestigungselement (116) zu der Durchgangsöffnung (110) positioniert.

14. Verfahren nach Anspruch 13, ferner aufweisend die Schritte:
- Einbringen eines Formwerkzeugs (124) in die wenigstens eine Durchgangsöffnung (110),
- plastisches Umformen des wenigstens einen Materialreservoirs (114) durch das Einbringen des Formwerkzeugs (124) in die wenigstens eine Durchgangsöffnung (110),
- Ausbilden des Umformabschnitts (130) durch das plastische Umformen des Materialreservoirs (114), wobei der Umformabschnitt (130) sich von der Umfangswandung (104) des Profilelements (102) in Richtung des Innenraums (106) des Profilelements (102) erstreckend ausgebildet wird.

## Claims

1. Structural component (100), in particular a cockpit cross-member for a motor vehicle, comprising:
- a profile element (102) which has a peripheral wall (104) that delimits an interior (106) of the profile element (102) at least in some regions, and at least one through opening (110) provided in the peripheral wall (104) of the profile element (102),
- at least one fastening element (116) which is arranged in the interior (106) of the profile element (102) so as to correspond to the at least one through opening (110), and
- at least one forming portion (130) which is configured on the profile element (102) and/or on the fastening element (116) and positions the fastening element (116) with respect to the through opening (110);
**characterized in that**
the at least one forming portion (130) extends from the peripheral wall (104) of the profile element (102) in the direction of the interior (106) of the profile element (102).

2. Structural component according to Claim 1, **characterized in that** the at least one forming portion (130) acts on and/or engages in the at least one fastening element (116) and/or the profile element (102).

3. Structural component according to either of Claims 1 and 2, **characterized in that** the at least one forming portion (130) is configured by plastic forming of a material reservoir (114) provided on the profile element (102) and/or on the fastening element (116).

4. Structural component according to Claim 3, **characterized in that** the material reservoir (114) is configured for configuring the at least one forming portion (130) on an edge region (112) of the profile element (102) surrounding the through opening (110).

5. Structural component according to Claim 3 or 4, **characterized in that** the material reservoir (114) is configured as a projecting portion which is configured by the peripheral wall (104) of the profile element (102).

6. Structural component according to one of Claims 3 to 5, **characterized in that** a plurality of material reservoirs (114) which are spaced apart from one another are configured on the profile element (102) and/or the at least one fastening element (116), in particular on the edge region (112) of the profile element (102) delimiting the through opening (110), for configuring a plurality of forming portions (130).

7. Structural component according to one of the preceding claims, **characterized in that** the at least one fastening element (116) has a sleeve-shaped base body (118) and extends between opposing internal walls (120) of the profile element (102).

8. Structural component according to one of the preceding claims, **characterized in that** an internal cross section of the at least one through opening (110) is configured at least in some regions to be smaller than a cross section of the fastening element (116), and the fastening element (116) which is positioned with respect to the through opening (110) bears at least in some regions against an internal wall portion of the profile element (102) surrounding the through opening (110).

9. Structural component according to one of the preceding claims, **characterized in that** the profile element (102) has at least one further through opening (110) in the peripheral wall (104) of the profile element (102) opposing the at least one through opening (110).

10. Structural component according to Claim 9, **characterized in that** an internal cross section of the at least one further through opening (110) is configured at least in some regions to be smaller than a cross section of the fastening element (116), and the fastening element (116) bears at least in some regions against an internal wall portion of the profile element (102) surrounding the at least one further through opening (110).

11. Structural component according to Claim 9, **characterized in that** the at least one further through opening (110) has an internal cross section through which the at least one fastening element (116) can be introduced into the interior (106) of the profile element (102).

12. Structural component according to one of the preceding claims, **characterized in that** the profile element (102) is an internal high pressure-formed tubular element.

13. Method for producing a structural component (100) according to one of Claims 1 to 12, having the steps:
- providing a profile element (102) which has a peripheral wall (104) which at least in some regions delimits an interior (106) of the profile element (102), and at least one through opening (110) which is provided in the peripheral wall (104) of the profile element (102),
- introducing at least one fastening element (116) into the interior (106) of the profile element (102) and orienting the fastening element (116) with respect to the at least one through opening (110),
- forming at least one material reservoir (114) configured on the profile element (102) and/or on the fastening element (116) for configuring a forming portion (130) which positions the fastening element (116) with respect to the through opening (110).

14. Method according to Claim 13, further having the steps:
- introducing a forming tool (124) into the at least one through opening (110),
- plastically forming the at least one material reservoir (114) by introducing the forming tool (124) into the at least one through opening (110),
- configuring the forming portion (130) by plastic forming of the material reservoir (114), wherein the forming portion (130) is configured so as to extend from the peripheral wall (104) of the profile element (102) in the direction of the interior (106) of the profile element (102).

## Revendications

1. Composant de structure (100), en particulier traverse de cockpit pour un véhicule à moteur, comprenant:
- un élément profilé (102) avec une paroi périphérique (104), qui délimite au moins par endroits un espace intérieur (106) de l'élément profilé (102), et au moins une ouverture de passage (110), qui est prévue dans la paroi périphérique (104) de l'élément profilé (102),
- au moins un élément de fixation (116), qui est disposé dans l'espace intérieur (106) de l'élément profilé (102) de manière à correspondre à l'au moins une ouverture de passage (110), et
- au moins une section de façonnage (130) formée sur l'élément profilé (102) et/ou sur l'élément de fixation (116), ladite section de façonnage positionnant l'élément de fixation (116) par rapport à l'ouverture de passage (110);
**caractérisé en ce que**
l'au moins une section de façonnage (130) s'étend depuis la paroi périphérique (104) de l'élément profilé (102) en direction de l'espace intérieur (106) de l'élément profilé (102).

2. Composant de structure selon la revendication 1, **caractérisé en ce que** l'au moins une section de façonnage (130) s'engage et/ou vient en prise sur l'au moins un élément de fixation (116) et/ou sur l'élément profilé (102).

3. Composant de structure selon l'une des revendications 1 ou 2, **caractérisé en ce que** l'au moins une section de façonnage (130) est formée par façonnage plastique d'un réservoir de matériau (114) prévu sur l'élément profilé (102) et/ou sur l'élément de fixation (116).

4. Composant de structure selon la revendication 3, **caractérisé en ce que** le réservoir de matériau (114) est formé pour former l'au moins une section de façonnage (130) sur une zone de bord (112) de l'élément profilé (102) entourant l'ouverture de passage (110).

5. Composant de structure selon la revendication 3 ou 4, **caractérisé en ce que** le réservoir de matériau (114) est formé comme une partie faisant saillie formée par la paroi périphérique (104) de l'élément profilé (102).

6. Composant de structure selon l'une des revendications 3 à 5, **caractérisé en ce que** plusieurs réservoirs de matériau (114) espacés les uns par rapport aux autres sont formés pour former plusieurs sections de façonnage (130) sur l'élément profilé (102) et/ou sur l'au moins un élément de fixation (116), en particulier sur la zone de bord (112) de l'élément profilé (102) délimitant l'ouverture de passage (110).

7. Composant de structure selon l'une des revendications précédentes, **caractérisé en ce que** l'au moins un élément de fixation (116) comporte un corps de base (118) en forme de douille et s'étend entre des parois intérieures (120) opposées de l'élément profilé (102).

8. Composant de structure selon l'une des revendications précédentes, **caractérisé en ce qu'**une section transversale intérieure de l'au moins une ouverture de passage (110) est au moins par endroits plus petite qu'une section transversale de l'élément de fixation (116) et l'élément de fixation (116) positionné par rapport à l'ouverture de passage (110) repose au moins par endroits sur une section de paroi intérieure de l'élément profilé (102) entourant l'ouverture de passage (110).

9. Composant de structure selon l'une des revendications précédentes, **caractérisé en ce que** l'élément profilé (102) comporte, à l'opposé par rapport à l'au moins une ouverture de passage (110), au moins une autre ouverture de passage (110) dans la paroi périphérique (104) de l'élément profilé (102).

10. Composant de structure selon la revendication 9, **caractérisé en ce qu'** une section transversale intérieure de l'au moins une autre ouverture de passage (110) est au moins par endroits plus petite qu'une section transversale de l'élément de fixation (116) et l'élément de fixation (116) repose au moins par endroits sur une section de paroi intérieure de l'élément profilé (102) entourant l'au moins une autre ouverture de passage (110).

11. Composant de structure selon la revendication 9, **caractérisé en ce que** l'au moins une autre ouverture de passage (110) comporte une section transversale intérieure à travers laquelle l'au moins un élément de fixation (116) peut être introduit dans l'espace intérieur (106) de l'élément profilé (102).

12. Composant de structure selon l'une des revendications précédentes, **caractérisé en ce que** l'élément profilé (102) est un élément tubulaire façonné par une pression interne élevée.

13. Procédé de fabrication d'un composant de structure (100) selon l'une des revendications 1 à 12, comportant les étapes:
- fourniture d'un élément profilé (102), qui comporte une paroi périphérique (104), qui délimite au moins par endroits un espace intérieur (106) de l'élément profilé (102), et au moins une ouverture de passage (110), qui est prévue dans la paroi périphérique (104) de l'élément profilé (102),
- introduction d'au moins un élément de fixation (116) dans l'espace intérieur (106) de l'élément profilé (102) et orientation de l'élément de fixation (116) par rapport à l'au moins une ouverture de passage (110),
- façonnage d'au moins un réservoir de matériau (114) formé sur l'élément profilé (102) et/ou sur l'élément de fixation (116) pour former une section de façonnage (130), qui positionne l'élément de fixation (116) par rapport à l'ouverture de passage (110).

14. Procédé selon la revendication 13, comportant par ailleurs les étapes:
- introduction d'un outil de formage (124) dans l'au moins une ouverture de passage (110),
- façonnage plastique de l'au moins un réservoir de matière (114) par l'introduction de l'outil de formage (124) dans l'au moins une ouverture de passage (110),
- formation de la section de façonnage (130) par le façonnage plastique du réservoir de matériau (114), la section de façonnage (130) étant formée de manière à s'étendre depuis la paroi périphérique (104) de l'élément profilé (102) en direction de l'espace intérieur (106) de l'élément profilé (102).
